# EUROPEAN PATENT APPLICATION

(11) **EP 1 332 917 A1**
(43) Date of publication of application: **06.08.2003**
(21) Application number: 02447017.1
(22) Date of filing: 31.01.2002
(51) Int. Cl.: B60Q 1/54

(54) **Vehicle comprising speed indication means**

(71) Applicant: KADEB, 7700 Moeskroen (BE)
(72) Inventor: Goetschalckx, Peter, 2990 Wuustwezel (BE)
(74) Representative: Luys, Marie-José A.H.

(57) **Abstract**

A vehicle provided with means containing information on the speed and/or changes in the speed with which the vehicle is moving, the means being at a position that can be observed from at least one subsequent vehicle.

## Description

The present invention relates to a vehicle comprising speed indication means.

It has become general use to mount a stoplight at the backside of a vehicle to provide a better alertion of a driver approaching the back of this vehicle when the vehicle in front of him lowers its speed by touching the brakes or stops. As a consequence, the following vehicle can adapt its speed to the speed of the vehicle in front of him.

The disadvantage of such a system is however that in the case the driver of the first vehicle uses the motor to brake, the following second vehicle is not alerted of this slowing down. This involves a serious risk for collisions.

There is thus a need to an improved vehicle alertion system, which informs drivers on the changing speed of other vehicles.

It is the object of the present invention to provide a vehicle with an improved alertion system in case the speed is changing.

This is achieved according to the invention with the technical features of the first claim.

The vehicle of the present invention is provided with means containing information on the speed and/or changes in the speed with which the vehicle is moving, the means being at a position that can be observed from at least one subsequent vehicle. The driver in a vehicle driving after the vehicle according to the invention is at each time informed about the speed of the vehicle in front of him, and as a consequence, also about whether the speed of the vehicle increases or decreases. In that way, the driver of at least the vehicle following the vehicle with changing speed is alerted of such changing speed, and thus of when the vehicle accelerates or slows down, and this irrespective of the fact whether the driver of the vehicle with changing speed uses the motor or not. This allows drivers of the following vehicles to adapt their driving behaviour to the traffic in front of him, facilitating in this way the circulation of the traffic. In this way, passing manoeuvres can also be performed in a faster and safer way. In adition, as, in bad weather conditions, the intensity of the speed indication is in the same order of magnitute as that of the fog lamp, drivers of the following vehicles can adapt their driving behaviour to the traffic in front of him, facilitating also in this case the circulation of the traffic.

Preferably, the means for indicating the speed and/or changes in the speed comprise a digital speed indication giving the actual speed of the vehicle. In that way, the driver in the subsequent vehicle is informed on the speed with which his own vehicle proceeds by observing the speed indication on the back of the vehicle in front of him. This is much safer than the case in which the driver has to look on his dashboard to be informed about his speed.

Moreover, the way of conducting a speed check may be facilitated, since digital cameras can now record both the licensing plate as well as the indicated speed of the vehicles.

In a preferred embodiment according to the invention, the means for indicating the speed an/or changes in the speed comprise an indication whether the speed of the vehicle remains constant, increases or decreases. For instance, a horizontal line, an upward arrow and a downward arrow besides the digital speed indication can indicate that the speed of the vehicle remains constant, increases or decreases, respectively. In this way, the driver in the following vehicle is alerted in a second way to the fact that the speed of the vehicle in front of him decreases, resulting in an enhanced traffic safety.

Preferably, the means for indicating the speed of the vehicle are placed at the back of the vehicle. For a passenger car, this may either be on the rear window, or behind the rest of the back seat, or at any other suitable place known to the man skilled in the art. For a (trailer) truck, the means for indicating the speed may be mounted on the rear bumper. In this way, the speed indication is at a distance as close as possible to the following vehicle, thereby enhancing the visibility of the information.

In another preferred embodiment according to the invention, the means for indicating the speed and/or changes in the speed further comprise an indication whether the speed of the vehicle is controlled by a 'cruise control system' present in the vehicle or not. For instance, the colour of the digital speed indication may differ depending on whether or not the speed of the vehicle is controlled by a 'cruise control system' (a 'constant speed mode') present in the vehicle.

Preferably, the means for indicating the speed and/or changes in the speed comprises a screen having a digital speed indication.

Preferably, the characters of the digital speed indication have a height of at least 10 cm. In this way, the magnitude of the numbers is large enough to be observed from a distance of about 150 meters in optimal weather conditions.

Preferably, the screen comprises an indication whether the speed of the vehicle is controlled by a cruise control system present in the vehicle or not.

The speed indication means are coupled to speed measuring means provided in the vehicle. These speed measuring means comprise general means present in the vehicle provided for measuring the speed of the vehicle and that are connected with the speed indicator on the dashboard of the vehicle.

The invention also relates to a speed indication means as part of the vehicle according to the invention.

The present invention is further elucidated in the following figure and description of the figure.

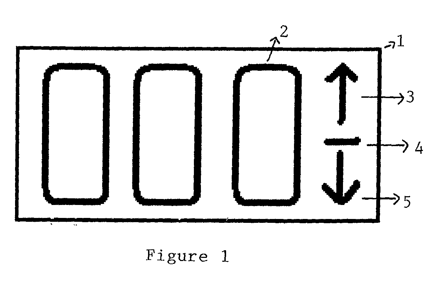

Figure 1 shows a front view of a preferred embodiment of the means for indicating the speed and/or changes in the speed according to the invention.

In figure 1, a screen (1) is shown having three digital characters (2), indicating the actual speed of the vehicle. The speed of the vehicle provided with the screen as shown in figure 1 would be zero. Further, an upward (3) and a downward (4) arrow are present, as well as a horizontal line (5). Depending on whether the vehicle accelerates, slows down or moves at a constant speed, the respective signals (3, 4, 5) will light up.

## Claims

1. A vehicle **characterized in that** the vehicle is provided with means containing information on the speed and/or changes in the speed with which the vehicle is moving, the means being at a position that it can be observed from at least one subsequent vehicle.

2. A vehicle according to claim 1, **characterized in that** the means for indicating the speed and/or changes in the speed comprise a digital speed indication giving the actual speed of the vehicle.

3. A vehicle according to claims 1-2, **characterized in that** the means for indicating the speed and/or changes in the speed comprise an indication whether the speed of the vehicle remains constant, increases or decreases.

4. A vehicle according to claims 1-3, **characterized in that** the means for indicating the speed and/or changes in the speed are mounted on the rear bumper, the rear window or behind the rest of the back seat of the vehicle.

5. A vehicle according to claims 1-4, **characterized in that** the means for indicating the speed and/or changes in the speed further comprise an indication whether the speed of the vehicle is controlled by a cruise control system present in the vehicle or not.

6. A vehicle according to claims 1-5, **characterized in that** the means for indicating the speed and/or changes in the speed comprise a screen having a digital speed indication.

7. A vehicle according to claim 6, **characterized in that** the characters of the digital speed indication have a height of at least 10 cm.

8. A vehicle according to claims 6-7, **characterized in that** the screen comprises an indication whether the speed of the vehicle is controlled by a cruise control system present in the vehicle or not.

9. A vehicle according to any one of claims 1-8, **characterized in that** the speed indication means are coupled to speed measuring means provided in the vehicle.

10. Speed indication means as part of the vehicle of any one of claims 1-8.
